# EUROPEAN PATENT APPLICATION

(11) **EP 2 053 291 A2**
(43) Date of publication of application: **29.04.2009**
(21) Application number: 08163392.7
(22) Date of filing: 01.09.2008
(51) Int. Cl.: F16L 1/24

(54) **Non-abrasive pad for an articulated seabed mat**

(30) Priority: 08.10.2007 US 868547
(71) Applicant: Armortec, LLC, West Chester, OH 45069 (US)
(72) Inventor: Salerno, Joseph V., Mason, OH 45040 (US)
(74) Representative: Townsend, Stephen

(57) **Abstract**

A block and pad unit for use in forming a scabed mat (10) includes a concrete block (12) having an upper surface, a lower surface and at least four sides extending between the upper and lower surfaces. An opening (30) extends from the upper surface to the lower surface of the block. An abrasive resistant pad (22) is attached to one of the upper surface or the lower surface. The pad includes a base having a lower side adjacent the block and an upper side facing away from the block, an opening (46) aligned with the opening of the block, and a plurality of dome-shaped mounds (25) extending integrally upward from the upper side of the base and distributed about a periphery of the opening of the pad.

## Description

### TECHNICAL FIELD

The present application relates generally to a seabed mat, and more particularly to a non-abrasive pad for an articulated seabed mat.

### BACKGROUND

Hydrodynamic forces, which are generated by the bottom currents and waves, create a need for a stabilization technique for underwater pipes and other seabed installations in off shore applications. Seabed mats are often used for such stabilization and protection. The seabed mats can also reduce erosion.

Concrete has typically been used for the covering because of its strength and strong resistance to the action of natural types of water. However, many underwater pipelines are covered with a thin-filmed epoxy coating that is used as a protection system. If this epoxy coating is scratched, the pipeline is subject to corrosion. Therefore, some mats have utilized pads in conjunction with an articulated mat in an effort to prevent the concrete from scratching or damaging the epoxy coating of the underwater pipelines.

### SUMMARY

In an aspect, a block and pad unit for use in forming a seabed mat includes a concrete block having an upper surface, a lower surface and at least four sides extending between the upper and lower surfaces. An opening extends from the upper surface to the lower surface of the block. An abrasive resistant pad is attached to one of the upper surface or the lower surface. The pad includes a base having a lower side adjacent the block and an upper side facing away from the block, an opening aligned with the opening of the block, and a plurality of dome-shaped mounds extending integrally upward from the upper side of the base and distributed about a periphery of the opening of the pad.

In another aspect, an abrasive resistant pad for connection to a concrete block includes a base having a lower side and an upper side and an opening extending from the upper side to the lower side. A plurality of dome-shaped mounds extend integrally upward from the upper side of the base and distributed about a periphery of the opening. At least two spaced apart collar members extend downward from the periphery of the opening. Each collar member is angled to extend outward from the opening toward a perimeter of the base when moving from the base downward, and each collar member is configured to flex inward.

In another aspect, a seabed mat includes a plurality of concrete blocks, each block having an upper surface and a lower surface. A first aperture extends between opposed first and second sides of the block and a second aperture extends between opposed third and fourth sides of the block, the first aperture substantially perpendicular to the second aperture. A plurality of cables interconnect the plurality of blocks by passage through the first and second apertures of the blocks. A plurality of abrasive-resistant pads are attached to at least some of the blocks. Each pad includes a base having an upper side facing away from the associated block and a plurality of bulges extend integrally from the upper surface. The bulges are distributed about a perimeter of the pad, each bulge having a footprint having a width that is at least three times a height of the respective bulge.

The details of one or more embodiments are set forth in the accompanying drawings and the description below. Other features, objects, and advantages will be apparent from the description and drawings, and from the claims.

### BRIEF DESCRIPTION OF THE DRAWINGS

Fig. 1 is a plan view of an embodiment of a seabed mat;

Fig. 2 is a plan view of another embodiment of a seabed mat;

Fig. 3 is a side view of an embodiment of a block used to form the seabed mat of Fig. 1;

Fig. 4 is a top view of the block of Fig. 3;

Fig. 5 is a side view of an embodiment of a abrasive-resistant pad used to form the seabed mat of Fig. 1;

Fig. 6 is a bottom view of the abrasive-resistant pad of Fig. 5;

Fig. 7 is a top view of the abrasive-resistant pad of Fig. 5;

Fig. 8 is a diagrammatic, top view of the pad of Fig. 5 highlighting footprints of dome-shaped mounds of the abrasive-resistant pads;

Fig. 9 is a perspective view of the pad of Fig. 5 connected to the block of Fig. 3; and

Fig. 10 is a side view of the seabed mat of Fig. 1 laid over an underwater installation.

### DETAILED DESCRIPTION

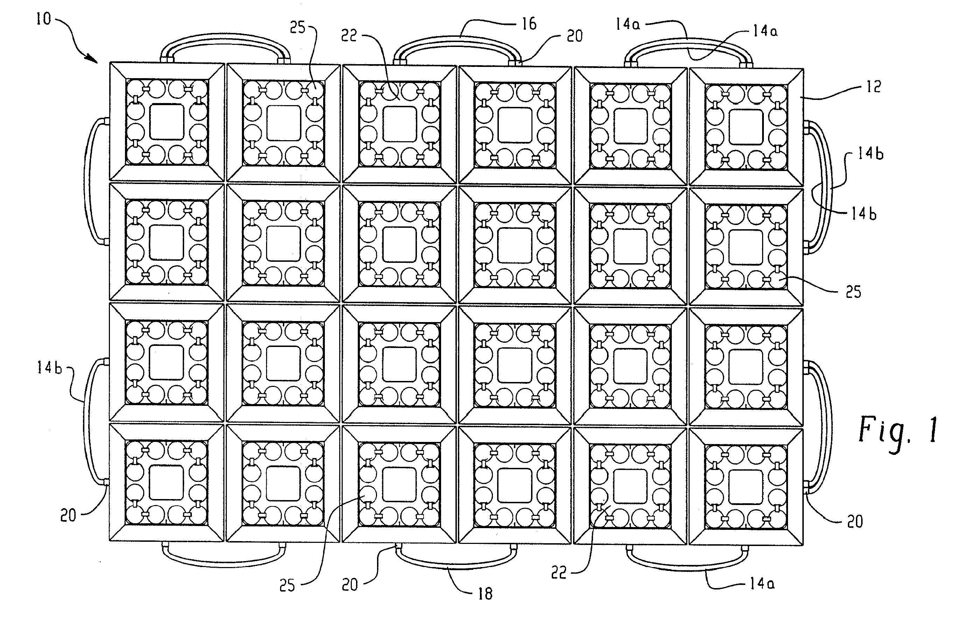

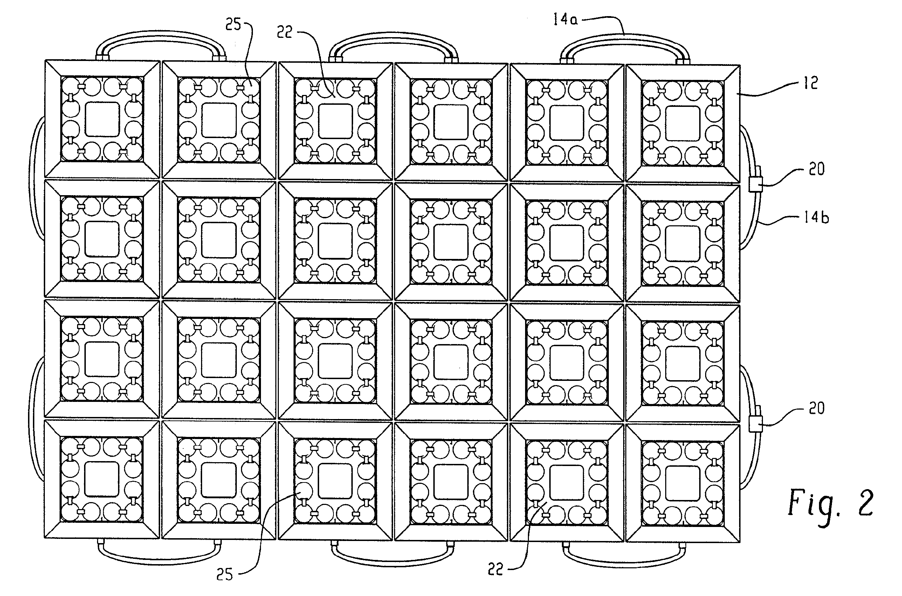

Referring to Fig. 1, a seabed mat 10 is formed of multiple blocks 12 aligned in rows and columns. As illustrated, each column of blocks 12 is substantially parallel with other columns and each row of blocks is substantially parallel with other rows, however, other configurations are possible. The blocks 12 are interconnected by cables 14. In some embodiments, a single cable 14a is used to connect a pair of adjacent columns of blocks 12 together and another single cable 14b is used to connect a pair of adjacent rows of blocks together. The ends of the cables 14a extend from the ends of adjacent columns of the blocks 12 and attach to each other to form a loop 16. A portion of the cables 14a also extends from opposite ends of the columns to form loops 18. The loops 16, 18 may be used in lifting, handling and installation of the seabed mat 10. Non-corrosive compression sleeves 20 are attached to the cables 14a where the cables extend from the columns of blocks 12. Each end of the cables 14a is connected by a compression sleeve 20 to the portion of the cable 14a extending from the adjacent column, thereby forming double-stranded loops 16. Cables 14b are used to connect adjacent rows of blocks 12 together. The cables 14b extend from ends of the rows of blocks 12 and may be connected together in the same or similar fashion as cables 14a. The compression sleeves 20 may be sufficiently large to prevent them from slipping into the interior of the blocks 12. Other methods for interconnecting the blocks 12 are also contemplated. For example, Fig. 2 shows an embodiment where cables 14b are tensioned with ends of the cables 14b connected by a compression sleeve 20.

Each block 12 includes an abrasive-resistant pad 22 connected thereto. As will be described in greater detail below, the pads 22 provide a contact point between the blocks 12 and a seabed or underwater installation overlaid by the pad 22 and the block 12. The pads 22 include a series of bulges, in the illustrated embodiment, dome-shaped mounds 25 formed of the abrasive-resistant material that reduce the contact area between the blocks 12 and the installation (or other structure in contact with the mat).

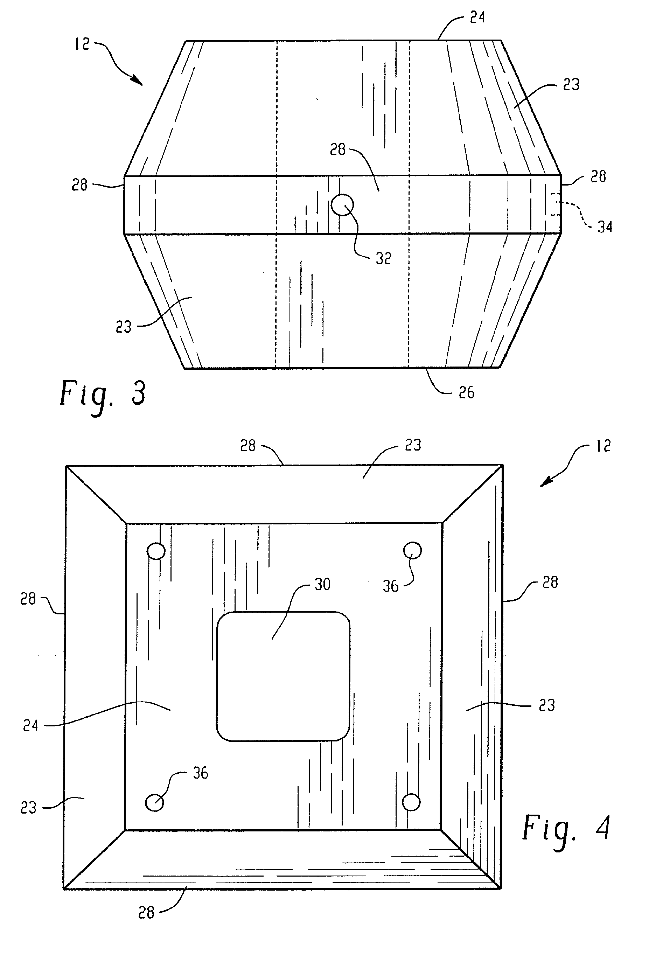

Figs. 3 and 4 illustrates a block 12 in isolation without the pad 22. While various shapes may be used, the block 12 (e.g., formed of concrete) is shown as upper and lower trapezoidal-shaped units 23 and includes an upper surface 24, a lower surface 26 and sides 28. The upper surface 24 and lower surface 26 are each somewhat square-shaped. An opening 30 extends completely through the block 12 from the upper surface 24 to the lower surface 26. The shape of the opening 30 can be of any number of shapes; however, the illustrated shape is a square.

The block 12 includes apertures 32 and 34 that extend between sides 28 of the block. The apertures 32 and 34 run substantially perpendicular to each other and intersect the opening 30. The apertures 32 and 34 are sized to receive the cables 14 therethrough to interconnect the blocks 12, for example, as described with reference to Fig. 1. Extending inwardly from the upper surface 24 of the block 12 are dowel holes 36. In this embodiment, there are four dowel holes 36 at the corners of the upper surface 24.

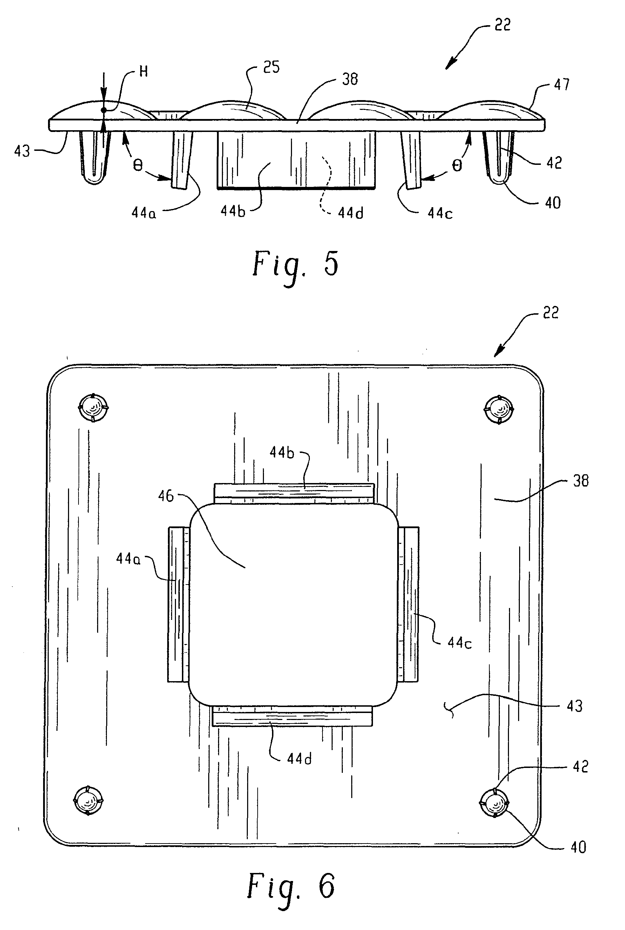

Referring to Figs. 5 and 6, the abrasive-resistant pad 22 includes a substantially planar base 38 formed of abrasive-resistant material and self-locking dowels 40 that extend outwardly from a lower surface 43 of the base. The self-locking dowels 40 include fins 42 that extend along the length of the self-locking dowels. The self-locking dowels 40 can have a maximum diameter slightly larger than that of the dowel holes 36 in the block 12 so that the self-locking dowels can be press-fit into the dowel holes thereby securing the pad 22 to the block.

A collar 44 formed of separate collar members 44a-44d also extends downward from the base 38. The collar 44 is associated with an opening 46 extending through the pad 22. As can be seen most clearly by collar members 44a and 44c of Fig. 5, the collar members 44a-44d are biased outwardly toward the edges of the pad 22, but are flexible enough to be urged inward, so that the collar can be press-fit into the opening 30 extending through the block 12. In one implementation, opposed collar members are oriented non-perpendicular to the base 38 and angled outward such that the planes containing the collar members intersect the base to define an angle Ø of less than 90 degrees, such as between about 90 degrees and 75 degrees (see Fig. 5). The outward bias of the collar members 44a-44d increases the friction fit between the collar 44 and the block 12. By separating the collar members 44a-44d from each other, their flexibility can be increased over a continuous collar. In some embodiments, a continuous collar may be provided instead of the separate collar members.

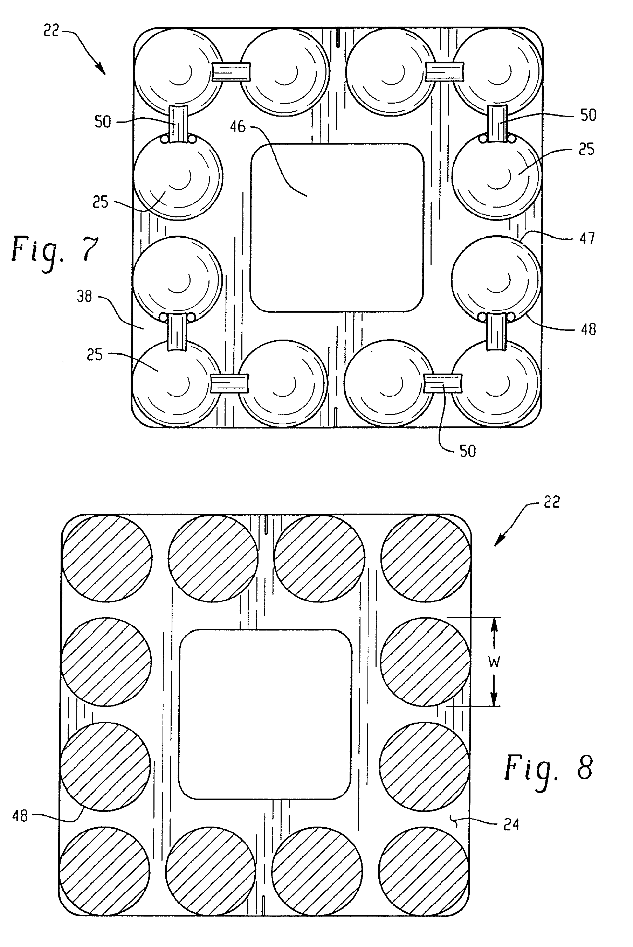

Referring to Figs. 5 and 7, the dome-shaped mounds 25 are provided on an upper surface of the pad 22. The dome-shaped mounds 25 are aligned in single-file, located about the opening 46 and along the peripheral edges of the pad 22 in a spaced-apart fashion. Other arrangements of the dome-shaped mounds 25 are possible, however.

The dome-shaped mounds 25 each have a round periphery 47 that intersects with the base 38. The intersection of the periphery 47 with the upper surface 24 defines a footprint 48 of the dome-shaped mounds on the base 38. In the illustrated embodiment, the footprints 48 are substantially circular. Fig. 8 illustrates the footprints 48 of the dome-shaped mounds 24. Each footprint 48 has an area (the shaded region) and a width W. In some embodiments, the area of each footprint 48 is at least two percent (e.g., between about two percent and about five percent) of the total area of the upper surface 24 (not including opening 46) of the pad 22. In one implementation, between 9-16 dome-shaped mounds are provided and the total footprint area of such mounds is between about 30-60 percent of the total area of the upper surface 24. Additionally, the profile of the dome-shaped mounds 24 is low to the base 38. In some embodiments, a height H (Fig. 5) of the dome-shaped mounds 24 is less than the width W of their footprint 48. In one implementation, the width W may be at least about 3 times the height H, such as about six times the height H.

Referring back to Fig. 7, spanning a distance between certain ones of the dome-shaped mounds 24 are connector members 50 which are raised from base 38. In some embodiments, the connector members 50 may be used as a reinforced location where a fastener (such as a staple) may be applied through the pad material and into a respective block 12. In other embodiments, the pad 22 may not include the connector members 50.

The dome-shaped mounds 24, connector members 50, dowels 40 and collar 44 may all be formed integrally with the base 38, for example, using a molding process. Suitable materials for forming the pads 22 include high-density polyethylene (HDPE), low-density polyethylene (LDPE), polyvinyl chloride (PVC), nylon or mixtures thereof.

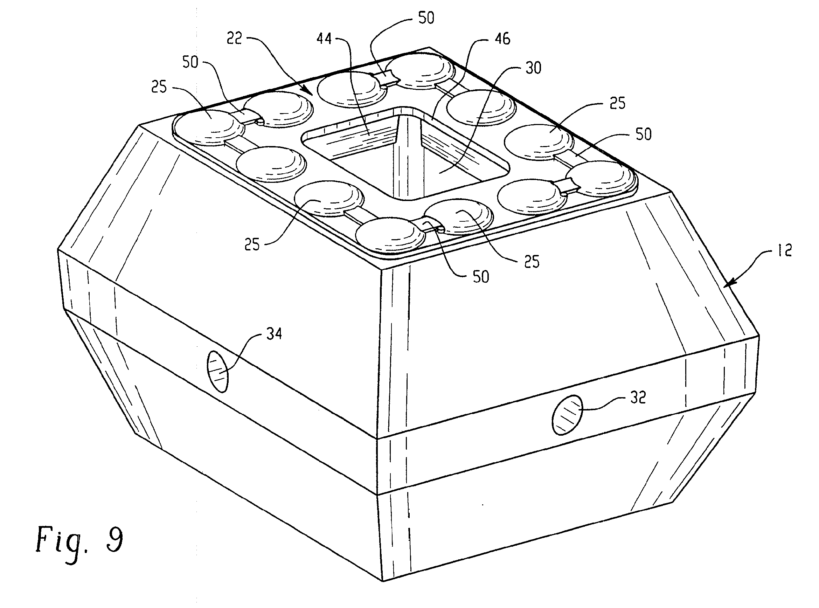

Referring to Fig. 9, the pad 22 is shown attached to the block 12. As can be seen, the pad 22 rests on the upper surface of the block 12, the dowels 40 received by the dowel holes 36 and the collar 44 located in the opening 30 of the block. The collar 44 can facilitate alignment of the openings 30 and 46.

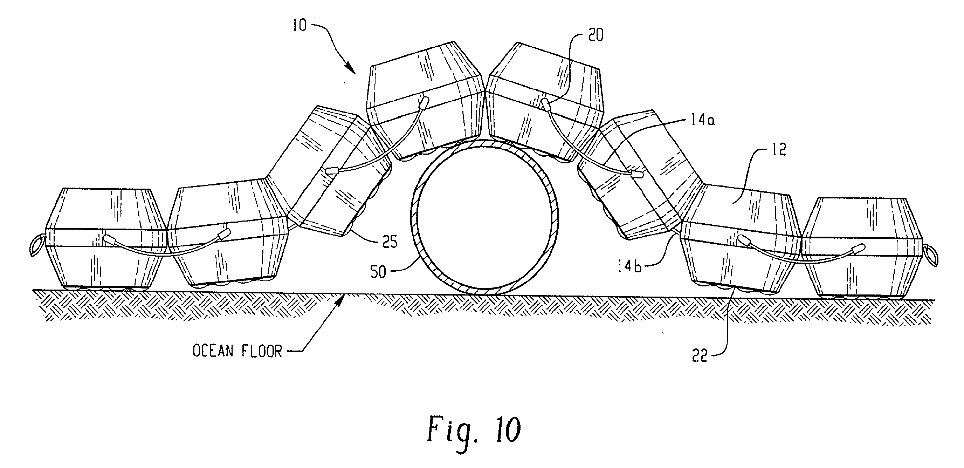

Referring to Fig. 10, the assembled seabed mat 10 (Figs. 1 and 2) is shown laid over an installation, e.g., pipe 50. Enough space is provided between the blocks 12 of the mat 10 so that the mat can articulate and blanket the pipe 50. The dome-shaped mounds 24 provide a contact point between the seabed mat 10 and the pipe 50 over-laid by the mat. Particularly, the dome-shaped mounds 24 provide an anti-abrasion material to protect against the creation of defects in the coating of underwater pipeline.

Additionally, dome-shaped mounds 24 can reduce contact area between the mat 10 and any underlying surface. This can be advantageous, for example, during installation of the mat 10 when it may be moved from one location to another during which the pads 22 may be slid over a surface. Reduced contact area between the pad 22 and the surface can reduce the likelihood that a pad 22 may be torn away from a block 12 during such an installation, removal, repair or readjustment process.

A number of detailed embodiments have been described. Nevertheless, it will be understood that various modifications may be made. Accordingly, other embodiments are within the scope of the claims.

## Claims

1. A block and pad unit for use in forming a seabed mat, the unit including:
a concrete block having an upper surface, a lower surface and at least four sides extending between the upper and lower surfaces, a opening extending from the upper surface to the lower surface;
an abrasive resistant pad attached to one of the upper surface or the lower surface, the pad including:
a base having a lower side adjacent the block and an upper side facing away from the block,
an opening aligned with the opening of the block, and
a plurality of dome-shaped mounds extending integrally upward from the upper side of the base and distributed about a periphery of the opening of the pad.

2. The block and pad unit of claim 1, wherein the plurality of dome-shaped mounds each have a footprint that is at least about 2 percent of a total area of the upper side of the base.

3. The block and pad unit of claim 2, wherein the plurality of dome-shaped mounds each have a footprint that is between about 2 percent and about 5 percent of the total area of the upper side of the base.

4. The block and pad unit of claim 2, wherein each footprint of the plurality of dome-shaped mounds is spaced-apart from an adjacent footprint of the plurality of the dome-shaped mounds, and each footprint is substantially circular.

5. The block and pad unit of claim 1, wherein the plurality of dome-shaped mounds includes between 9 and 16 dome-shaped mounds that together have a combined footprint that is between about 30 percent and about 60 percent of the total area of the upper surface of the base.

6. The block and pad unit of claim 4 wherein a width of the footprint of each dome-shaped mound is at least three times a height of the dome-shaped mound.

7. The block and pad unit of claim 1, wherein the plurality of dome-shaped mounds are all aligned single file about the periphery of the opening through the block.

8. The block and pad unit of claim 1, wherein the plurality of dome-shaped mounds each have a footprint having a width that is greater than a height of the respective dome-shaped mound.

9. The block and pad unit of claim 1, wherein the block includes at least one dowel hole and the pad includes a dowel that is received in the dowel hole.

10. The block and pad unit of claim 1 wherein the pad opening includes at least one pair of opposed, downwardly extending collar members positioned within the block opening and engaged with side portions of the block opening to aid in stabilizing the pad on the block, the collar members separate from each other, and each collar member biased outward against the respective side portion of the block opening.

11. A seabed mat comprising:
a plurality of block and pad units in accordance with claim 1; and
at least one cable member interconnecting the plurality of block and pad units into a mat configuration.

12. An abrasive resistant pad for connection to a concrete block, the pad comprising:
a base having a lower side and an upper side and an opening extending from the upper side to the lower side;
a plurality of dome-shaped mounds extending integrally upward from the upper side of the base and distributed about a periphery of the opening;
at least two spaced apart collar members extending downward from the periphery of the opening, each collar member angled to extend outward from the opening toward a perimeter of the base when moving from the base downward, each collar member configured to flex inward.

13. The pad of claim 12 wherein the opening is rectangular on the two spaced apart collar members are located on opposed sides of the opening.

14. The pad of claim 12 wherein the opening is rectangular and four collar members are provided, one at each side of the opening.

15. The pad of claim 12 wherein the plurality of dome-shaped mounds includes between 9 and 16 dome-shaped mounds that together have a combined footprint that is between about 30 percent and about 60 percent of the total area of the upper side of the base.

16. The pad of claim 15 wherein a width of the footprint of each dome-shaped mound is at least three time a height of the dome-shaped mound.

17. A method of forming a block and pad unit using the pad of claim 12, the method comprising the steps of:
providing a block with an opening between upper and lower surfaces thereof;
attaching the pad of claim 12 to the block such that the collar members are inserted within the opening of the block and are flexed inward via contact with side portions of the opening of the block.

18. A seabed mat, comprising:
a plurality of concrete blocks, each block having an upper surface and a lower surface, a first aperture extending between opposed first and second sides of the block and second aperture extending between opposed third and fourth sides of the block, the first aperture substantially perpendicular to the second aperture;
a plurality of cables interconnecting the plurality of blocks by passage through the first and second apertures of the blocks;
a plurality of abrasive-resistant pads attached to at least some of the blocks, each pad including:
a base having an upper side facing away from the associated block;
a plurality of bulges extending integrally from the upper surface and distributed about a perimeter of the pad, each bulge having a footprint having a width that is at least three times a height of the respective bulge.
